# EUROPEAN PATENT APPLICATION

(11) **EP 4 741 259 A1**
(43) Date of publication of application: **13.05.2026**
(21) Application number: 24211904.8
(22) Date of filing: 08.11.2024
(51) Int. Cl.: B62D 5/04

(54) **A SYSTEM AND METHOD FOR WHEEL BLOCKING DETECTION IN VEHICLES**

(71) Applicant: Volvo Truck Corporation, 405 08 Göteborg (SE)
(72) Inventor: HELDMANN, Joakim, 418 72 GÖTEBORG (SE); WINBLAD, Hanna, 433 62 SÄVEDALEN (SE)
(74) Representative: Kransell & Wennborg KB

(57) **Abstract**

A computer system (100) for a vehicle (104), the system comprising processing circuitry (102) configured to: determine a steering torque applied from a steering wheel (108) of the vehicle; control a steering assist system (114) to apply a steering torque overlay to at least one steerable wheel of the vehicle in the same direction as the determined steering torque applied from the steering wheel (108); compare the applied steering torque overlay with the determined steering torque applied from the steering wheel (108), predict a wheel blocking event based on the comparison, and apply a counter steering torque overlay using the steering assist system (114), that is opposite the steering torque from the steering wheel.

## Description

### TECHNICAL FIELD

The disclosure relates generally to vehicles. In particular aspects, the disclosure relates to a system and method for wheel blocking detection in vehicles. The disclosure can be applied to heavy-duty vehicles, such as trucks, buses, and construction equipment, among other vehicle types. The disclosure can be applied to passenger cars. Although the disclosure may be described with respect to a particular vehicle, the disclosure is not restricted to any particular vehicle.

### BACKGROUND

A steering system, such as a hydraulic or electric steering system can deliver strong force without much effort from the driver. This can cause damage to objects close to the steerable wheels or to the steerable wheel of the vehicle itself. Most modern heavy-duty vehicles are available with a steering torque overlay which assists the driver to steer even though the steerable wheels are blocked by an unknown object.

Destroying either property or/and tire or wheel is costly and may cause undesirable down-time for the vehicle.

### SUMMARY

According to a first aspect of the disclosure, there is provided a computer system for a vehicle, the system comprising processing circuitry configured to: determine a steering torque applied from a steering wheel of a the vehicle; control a steering assist system to apply a steering torque overlay to at least one steerable wheel of the vehicle in the same direction as the steering torque applied from the steering wheel; compare the steering torque overlay with the determined steering torque applied from the steering wheel, predict a wheel blocking event based on the comparison, apply a counter steering torque overlay using the steering assist system, that is opposite the steering torque from the steering wheel.

The first aspect of the disclosure may seek to detect a wheel blocking event and indicate the detection to a driver in a timely manner. A technical benefit may include reduced damages in case of a wheel blocking event. The counter steering torque overlay is advantageously timely applied before severe damages to either external objects or the wheel itself occur.

A steering torque overlay is an assisting torque applied to steerable wheels to assist a driver in completing a steering action. This steering torque overlay is often provided by a hydraulic or electric steering assist system.

The steering torque applied from a steering wheel may be the steering torque that a driver exerts to a steering wheel for turning the vehicle. The steering torque is measured by a steering torque sensor of the steering system.

The counter steering torque which is in the opposite direction to the steering wheel torque that is, opposite the steering direction intended by the driver, advantageously reduces the force between the wheel and the object causing the wheel blocking, and further also provides an indication to the driver that something is blocking the steerable wheels.

Optionally in some examples, including in at least one preferred example, the counter steering torque overlay may be lower than the steering torque applied from the steering wheel. A technical benefit may include that the counter steering torque is large enough for a driver to sense it but not too large such that it makes the vehicle turn in a direction opposite to the intention of the driver.

Optionally in some examples, including in at least one preferred example, the processing circuitry may be configured to adjust the counter steering torque overlay dynamically based on the steering torque from the steering wheel. A technical benefit may include that the counter steering torque overlay is adapted to the present steering torque such that it is ensured that it can be detected by a driver and that damages can be reduced or avoided for different magnitudes of steering torque. For example, the processing circuitry may increase the magnitude of the counter steering torque overlay based on an increase in the steering torque applied from the steering wheel. Thus, the more torque that is being applied from the steering wheel the larger the counter steering torque overlay.

Optionally in some examples, including in at least one preferred example, a wheel blocking event may be predicted when the comparison indicates that the steering torque overlay exceeds the steering torque by an amount that indicates wheel blocking. In other words, if the steering toque overlay is forced to apply an excessive overlay torque to overcome a resistance it means something is likely blocking the wheels. This is a simple yet robust way to classify a situation as a wheel blocking event.

Optionally in some examples, including in at least one preferred example, comparing the steering torque overlay with the steering torque applied from the steering wheel, and predicting a wheel blocking event based on the comparison may be performed in a deep neural network or a machine learning algorithm. A technical benefit may include an efficient, accurate, and reliable way to classify and detect wheel blocking events.

Optionally in some examples, including in at least one preferred example, the processing circuitry may be further configured to input data indicating the steering torque and the steering torque overlay in addition to at least one more data set into the deep neural network or a machine learning algorithm. A technical benefit may include that the algorithm can in this way, by using more data, improve its performance and increase the accuracy in detecting wheel blocking events.

Optionally in some examples, including in at least one preferred example, the at least one more data set may be selected from the group comprising: vehicle speed, steering angle, steering velocity, applied steering torque, vehicle mass, applied steering torque overlay, image data from a camera, and environmental data from a radar.

Optionally in some examples, including in at least one preferred example, the processing circuitry may be further configured to: provide an output message to a human-machine interface indicating that a wheel blocking event is detected. A technical benefit may include that a driver is provided with direct information concerning the wheel blocking event such that appropriate actions can be taken.

Optionally in some examples, including in at least one preferred example, the wheel blocking may be due to steerable wheels of the vehicle hitting an external object. As an example, a typical wheel blocking event is so called curb steering where the wheels hit a curb of a road.

Optionally in some examples, including in at least one preferred example, the processing circuitry may be further configured to: adjust the counter steering torque overlay dynamically based on the severity of the predicted wheel blocking event. A technical benefit may include to adapt the counter torque to the present wheel blocking event such that appropriate counter torque overlay can be applied and sensed by a driver. The severity of the wheel blocking event can be determined based on parameters such as vehicle speed, steering angle, visual data from camera 127, and applied steering torque.

There is further provided a vehicle comprising the computer system.

According to a second aspect of the disclosure, there is provided a computer-implemented method, comprising: determining, by processing circuitry of a computer system, a steering torque applied from a steering wheel of the vehicle; controlling, by the processing circuitry, a steering assist system to apply a steering torque overlay to at least one steerable wheel of the vehicle in the same direction as the steering torque applied from the steering wheel; comparing, by the processing circuitry, the steering torque overlay with determined the steering torque applied from the steering wheel, predicting, by the processing circuitry, a wheel blocking event based on the comparison, applying, by the processing circuitry, a counter steering torque overlay using the steering assist system, that is opposite the steering torque from the steering wheel.

The second aspect of the disclosure may seek to detect a wheel blocking event and indicate the detection to a driver in a timely manner. A technical benefit may include reduced damages in case of a wheel blocking event. The counter steering torque overlay is advantageously timely applied before severe damages to either external objects or the wheel itself occur.

Optionally in some examples, including in at least one preferred example, the counter steering torque overlay may be lower than the steering torque applied from the steering wheel. A technical benefit may include that the counter steering torque is large enough for a driver to sense it but not too large such that it makes the vehicle turn in a direction opposite to the intention of the driver.

Optionally in some examples, including in at least one preferred example, the method may further comprise, adjusting, by the processing circuitry, the counter steering torque overlay dynamically based on the steering torque from the steering wheel. A technical benefit may include that the counter steering torque overlay is adapted to the present steering torque such that it is ensured that it can be detected by a driver and that damages can be reduced or avoided for different magnitudes of steering torque. For example, the processing circuitry may increase the magnitude of the counter steering torque overlay based on an increase in the steering torque applied from the steering wheel. Thus, the more torque that is being applied from the steering wheel the larger the counter steering torque overlay.

Optionally in some examples, including in at least one preferred example, a wheel blocking event may be predicted when the comparison indicates that the steering torque overlay exceeds the steering torque by an amount that indicates wheel blocking. In other words, if the steering toque overlay is forced to apply an excessive overlay torque to overcome a resistance it means something is likely blocking the wheels. This is a simple yet robust way to classify a situation as a wheel blocking event.

Optionally in some examples, including in at least one preferred example, comparing the steering torque overlay with the steering torque applied from the steering wheel, and predicting a wheel blocking event based on the comparison may be performed in a deep neural network or a machine learning algorithm. A technical benefit may include an efficient, accurate, and reliable way to classify and detect wheel blocking events.

Optionally in some examples, including in at least one preferred example, the method may further comprise: inputting, by the processing circuitry, data indicating the steering torque and the steering torque overlay in addition to at least one more data set into the deep neural network or a machine learning algorithm. A technical benefit may include that the algorithm can in this way, by using more data, improve its performance and detect more wheel blocking events.

Optionally in some examples, including in at least one preferred example, the at least one more data set may be selected from the group comprising: vehicle speed, steering angle, steering velocity, applied steering torque, vehicle mass, applied steering torque overlay, image data from a camera, and environmental data from a radar.

Optionally in some examples, including in at least one preferred example, the method may further comprise: providing, by the processing circuitry, an output message to a human-machine interface indicating that a wheel blocking event is detected. A technical benefit may include that a driver is provided with direct information concerning the wheel blocking event such that appropriate actions can be taken.

Optionally in some examples, including in at least one preferred example, the wheel blocking may be due to steerable wheels of the vehicle hitting an external object.

Optionally in some examples, including in at least one preferred example, the metho may further comprise: adjusting, by the processing circuitry, the counter torque dynamically based on the severity of the predicted wheel blocking event. A technical benefit may include to adapt the counter torque to the present wheel blocking event such that appropriate counter torque overlay can be applied and sensed by a driver. The severity of the wheel blocking event can be determined based on parameters such as vehicle speed, steering angle, visual data from camera, and applied steering torque.

There is further provided a computer program product comprising program code for performing, when executed by the processing circuitry, the method of any of the examples.

There is further provided a non-transitory computer-readable storage medium comprising instructions, which when executed by the processing circuitry, cause the processing circuitry to perform the method of any of the examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system according to an example.
**FIG. 2** is a flow chart of an exemplary method to detect a wheel blocking event according to an example.
**FIG. 3** illustrates an example vehicle hitting a curb according to an example.
**FIG. 4A** is a graph of necessary driver torque to continue to steer the wheels to the right although the wheel hits a curb for a prior art system.
**FIG. 4B** is a graph of the necessary driver torque to continue to steer the wheels to the right although the wheel hits the curb for examples of the disclosure.
**FIG. 5** is another view of **FIG. 1****,** according to an example.
**FIG. 6** is a flow chart of an exemplary method to assist in wheel blocking events according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

When a vehicle hits a static object with its steerable wheels with the wheels turned, the steering system of the vehicle may provide excessive force to overcome the full or partial blocking of the wheels caused by hitting the static object. In such an event, the steering system may in fact apply so much force that the object or the wheels of the vehicle get damaged. With the examples presented herein, the steering system is controlled to alleviate such drawbacks such that damage can be avoided. Especially, the examples described in the disclosure suggest applying a counter steering torque when a wheel blocking event is detected. In this way, the force applied from the wheels to the object is reduced and at the same time, a driver may realize that the wheels are blocked by sensing the counter steering torque.

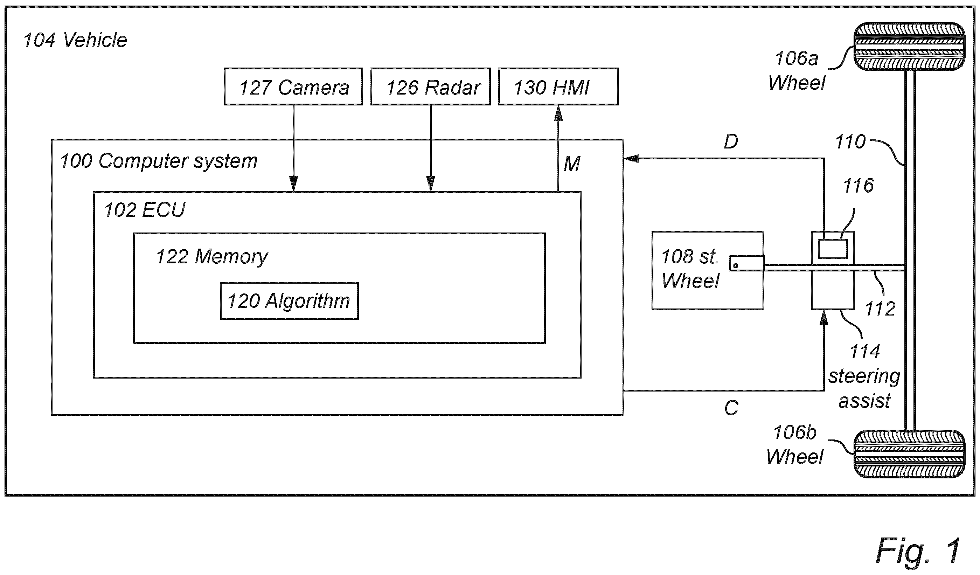

**FIG. 1** is an exemplary system diagram of a computer system 100 for wheel blocking detection and handling in a vehicle according to an example. The system 100 comprising processing circuitry 102 configured to perform various steps and actions described herein. The processing circuitry 102 may be or comprise an electronic control unit, ECU, and be comprised in a vehicle 104.

The vehicle 104 comprises steerable wheels 106a,b connected to a steering wheel 108 via a steering axle 110 and tie rods, and a steering link 112 which may be either a steering column 112 or a steer-by-wire system. When the steering wheel 108 is turned, the torque on the steering wheel 108 is transferred via the steering link 112 to the axle 110 to turn the steerable wheels 106a-b such that a heading of the moving vehicle can be varied. Furthermore, a steering assist system 114, such as a hydraulic or electric steering system often referred to a power steering, is configured to provide assisting torque to reduce the driver's effort to turn the steerable wheels 106a-b. Generally, a hydraulic power steering system uses pressurized fluid from a pump to a steering gear to assist the driver in turning the steering wheel with less effort. The torque overlay assists the driver in opening the valve, which regulates the amount of hydraulic flow that should pass through the steering gear. Typically, a higher flow rate provides more power assistance.

When a driver turns the steering wheel 108, a sensor 116 either of the steering assist system 114 or located as part or on the steering link 112 can sense the torque applied on the steering wheel 108. The steering assist system 114 may sense the resistance from the wheels 106a-b and provide assisting torque to assist the driver in turning the wheels 106a-b.

The processing circuitry 102 is configured to determine a steering torque applied from the steering wheel 108 to the steering link 112 of the vehicle 104. The data, *D*, indicating the steering torque may be supplied from the sensor 116. The applied steering torque data, D, is related to the amount of torque an electric motor in the torque overlay applies. The data, *D*, is typically reported from an MDS, Motor Drive System.

The processing circuitry 102 is configured to control the steering assist system 114 to apply a steering torque overlay to the steerable wheels 106a,b in the same direction as the steering torque applied from the steering wheel. That is, the steering torque overlay is supplied to the steerable wheels 106a,b via linking components such as, the steering link 112, the axle 110 and tie rods to the wheels 106a,b. The processing circuitry 102 transmits control messages C to the steering assist system 114 to control the steering torque overlay.

The processing circuitry 102 is further configured to compare the steering torque overlay with the steering torque applied from the steering wheel 108. Based on the comparison, the processing circuitry 102 predicts a wheel blocking event.

An event of wheel blocking may be predicted in various ways. In one example, a wheel blocking event is when the comparison indicates that the steering torque overlay exceeds the steering torque by an amount that indicates wheel blocking. In other words, when this occurs, the output from the detection algorithm 120, stored in a memory 122, is that a wheel blocking event is predicted. When the steering torque overlay exceeds the applied steering torque by a certain amount, as can be determined from testing different wheel blocking scenarios, it serves as an indication that the wheels are likely blocked. That is, the steering torque assist system applies an excessive amount of torque which is not within the normal operation limits or range, whereby a wheel blocking event can be concluded.

In other examples, the detection algorithm 120 is a deep neural network or a machine learning algorithm. In such example, predicting a wheel blocking event is performed in the deep neural network 120 or the machine learning algorithm. The deep neural network 120 or machine learning network is thus trained to differentiate between normal steering conditions and curb contact scenarios based on the comparison of driver-applied torque and steering torque overlay output, and other data.

The deep neural network 120 or machine learning algorithm uses input data indicating the steering torque from the steering wheel 108 sensed by sensor 116 and the steering torque overlay from the steering assist system 114 in addition to at least one more data set as input data. The at least one more data set is selected from the group comprising: vehicle speed, steering angle, steering velocity, vehicle mass, applied steering torque overlay, image data from a camera, and environmental data from a radar 126. The vehicle 104 may also include cameras 127 that provide real-time visual data to assist in detecting objects in proximity to the vehicle's steerable wheels. That visual data may also be used by the deep neural network 120 or machine learning algorithm as input.

The deep neural network 120 or other machine learning algorithm has been trained on training data of the above parameters where some data may be tagged as "wheel blocking positive" and some as "wheel blocking negative", to in this way learn how to recognize a wheel blocking event. Deep neural network 120 is one example algorithms, and example machine learning algorithms include e.g. supervised learning such as logistic regression or neural networks. The output from the deep neural network 120 or other machine learning algorithm is that a wheel blocking is predicted or that it is not predicted.

In case a wheel blocking event is predicted by the algorithm 120, the processing circuitry 102 is configured to control the steering assist system 114 to apply a counter steering torque overlay that is opposite the steering torque from the steering wheel 108.

A wheel blocking event may for example be due to steerable wheels of the vehicle hitting an external object such as a curb.

The counter torque overlay may set hardware or software based on testing various wheel blocking events where a driver is positioned to sense the counter torque in the steering wheel. The magnitude of the counter torque may be set from empirical testing in a real setting or in a lab setting.

In some examples, the counter steering torque overlay is lower in magnitude than the steering torque applied from the steering wheel 108. In this way, it can be ensured that the wheels 106a,b do not turn in the opposite direction of the intention by the driver.

The vehicle 104 may comprise a human-machine interface 130 configured to provide information of a wheel blocking event to a driver. The human-machine interface 130 may for example include a display and/or a speaker. The processing circuity 102 is configured to provide an output message M to a human-machine interface indicating that a wheel blocking event is detected.

For example, if the driver turns the steering wheel 108 90 degrees to the left and a curb steer is detected, the torque the drivers needs to apply to the steering wheel 108 is increased to continue to steer to the left. This creates a fake steering feel that corresponds to that the wheels 106a,b are blocked by something, which would lead to the driver stop trying to continue to steer more to the left. This could be combined with a HMI 130 warning, popup or telltale or sound indicating that a wheel block is detected.

In some examples, the processing circuitry 102 is configured to adjust the counter steering torque overlay dynamically based on the steering torque from the steering wheel 108. In other words, if the magnitude of the steering torque from the steering wheel varies, the processing circuitry 102 controls the counter steering torque overlay based on the variation. The variation in counter steering torque overlay may be proportional to the variation in steering wheel torque. It is thus envisaged that if the steering torque applied from the steering wheel increases the magnitude of the counter steering torque overlay also increases.

In other examples, the processing circuitry 102 may classify the wheel blocking event to determine the severity of the predicted wheel blocking event. To determine the severity of the predicted wheel blocking event, the processing circuity 102 may analyze data such as vehicle speed, steering angle, visual data from camera 127, and applied steering torque. The severity may be the probability of severe damage to the hit object or the vehicle, where a high probability indicates a high severity and a low probability indicates low severity. The processing circuitry 102 may be configured to adjust the counter torque dynamically based on the severity of the predicted wheel blocking event. That is, in case of low severity a lower counter torque overlay may be applied and in case of high severity a higher counter torque overlay may be applied. That is, the counter torque overlay may increase with increasing severity.

The vehicle 104 may be a heavy-duty truck with a hydraulic steering system or electric power steering (EPS) system.

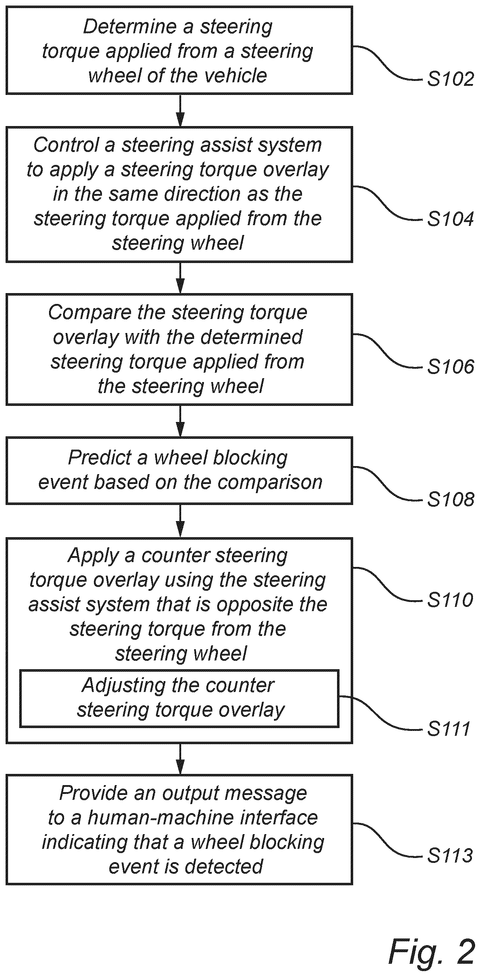

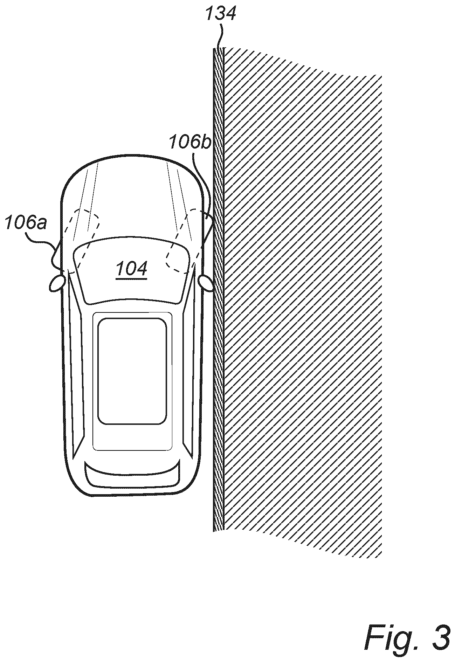

Fig. 2 is a flow-chart of method steps of a computer-implemented method, according to examples. Fig. 3 illustrates a vehicle 104 as one of its wheels 106b hit a curb 134 on its right side.

The vehicle comprises the computer system 100 having processing circuitry 102 configured to in step S102 determine a steering torque applied from a steering wheel of a steering system of the vehicle. Note that this step may be performed continuously and not necessarily only when a wheel hits an object. The vehicle comprises a torque sensor configured to detect a driver's steering input so that the steering wheel torque can be measured.

In step S104, controlling, by the processing circuitry, a steering assist system 114 to apply a steering torque overlay to the steering system in the same direction as the steering torque applied from the steering wheel 108. That is, the steering torque system assists the driver's steering input.

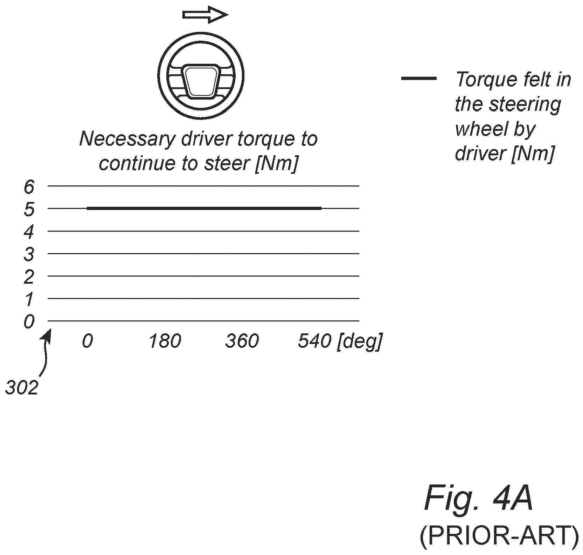

Turning to the graph 302 in fig. 4A where the necessary driver torque to continue to steer the wheels to the right although the wheel hits the curb 134 is shown for a typical prior art system. The graph shows torque versus steering angle in degrees. As the graph 302 shows, the necessary driver torque is constant. This means that the steering assist system will have to apply a relatively large amount of torque to continue steering to the right. The examples shown herein address this situation.

Returning to the flow-chart in fig. 2, in step S106, comparing, by the processing circuitry 102, the steering torque overlay with the steering torque applied from the steering wheel 108.

In step S108, predicting, by the processing circuitry 102, a wheel blocking event based on the comparison.

A wheel blocking event may be predicted when the comparison indicates that the steering torque overlay exceeds the steering torque by an amount that indicates wheel blocking.

Alternatively, comparing the steering torque overlay with the steering torque applied from the steering wheel, and predicting a wheel blocking event based on the comparison is performed in a deep neural network 120 or a machine learning algorithm. For this, the processing circuitry 102 inputs data indicating the steering torque and the steering torque overlay in addition to at least one more data set into the deep neural network 120 or a machine learning algorithm. The at least one more data set is selected from the group comprising: vehicle speed, steering angle, steering velocity, applied steering torque, vehicle mass, applied steering torque overlay, image data from a camera 127, and environmental data from a radar 126.

The deep neural network 120 or machine learning algorithm outputs a prediction of whether an unintended curb steering event is occurring.

In step S 110, applying, by the processing circuitry 102, a counter steering torque overlay using the steering assist system 112, that is opposite the steering torque from the steering wheel 108. In other words, based on the predicted curb steering event, the steering torque overlay system applies a counter torque to the steering wheel 108 that simulates the sensation of hitting an object 134. That is, the driver holding the steering wheel 108 will sense the counter torque.

The counter torque applied by the steering torque overlay system increases the resistance felt by the driver, discouraging further steering in the current direction.

In some examples, the counter steering torque overlay is lower than the steering torque applied from the steering wheel. That is, the counter steering torque applies less torque than the driver's input from the steering wheel 108.

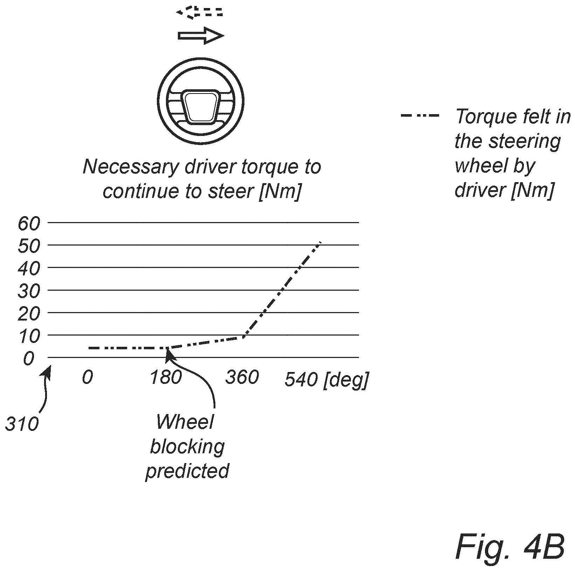

Fig. 4B is a graph 310 of the necessary driver torque to continue to steer the wheels to the right although the wheel hits the curb 134 for examples of the disclosure. Numbers on the axes are purely exemplary and serve as an example for clarity and completeness. The graph shows torque versus steering angle in degrees. As shown, the necessary torque starts off at a relatively low level but then increases steadily due to the counter torque applied to the steering wheel 108 from the steering assist system. The counter torque increases as the steering angle increases. Similarly, this can be considered an adjustment, in step S111 of the counter steering torque overlay that is applied dynamically based on the steering torque from the steering wheel as part of the applying step S 110, or as a separate step.

In some examples, the adjustment in step S111 may be, or may further include adjusting the counter torque dynamically based on the severity of the predicted wheel blocking event.

In some examples, the processing circuitry 102 provides, in step S113 an output message M to a human-machine interface 130 indicating that a wheel blocking event is detected. The output message M may be a warning signal to the driver, selected from the group consisting of a visual popup, telltale, and sound alert.

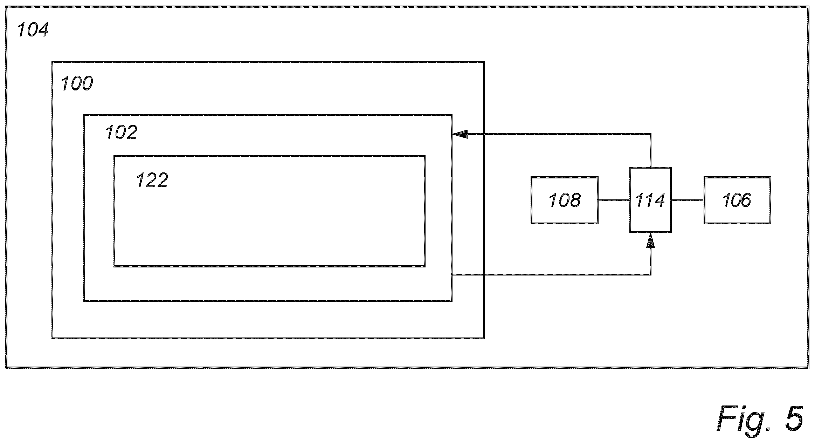

**FIG. 5** is another view of **FIG. 1****,** according to an example. Fig. 4 shows a computer system 100 for wheel blocking detection in a vehicle 104, the system comprising processing circuitry 102 configured to: determine a steering torque applied from a steering wheel 108 of the vehicle 104; control a steering assist system 114 to apply a steering torque overlay to at least one steerable wheel 106 in the same direction as the steering torque applied from the steering wheel 108; compare the steering torque overlay with the determined steering torque applied from the steering wheel 108, predict a wheel blocking event based on the comparison, apply a counter steering torque overlay using the steering assist system 114, that is opposite the steering torque from the steering wheel.

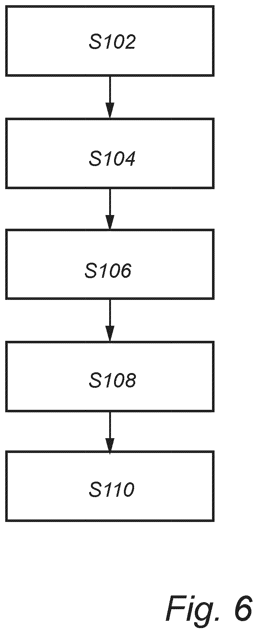

**FIG. 6** is a flow chart of a method to assist in wheel blocking event according to an example. In step S102, determining, by processing circuitry 102 of a computer system 100, a steering torque applied from a steering wheel 108 of the vehicle.

In step S104, controlling, by the processing circuitry 102, a steering assist system 112 to apply a steering torque overlay to at least one steerable wheel of the vehicle in the same direction as the steering torque applied from the steering wheel.

In step S106, comparing, by the processing circuitry 102, the steering torque overlay with the determined steering torque applied from the steering wheel 108.

In step S108, predicting, by the processing circuitry 102, a wheel blocking event based on the comparison.

In step S 110, applying, by the processing circuitry 102, a counter steering torque overlay using the steering assist system 114, that is opposite the steering torque from the steering wheel.

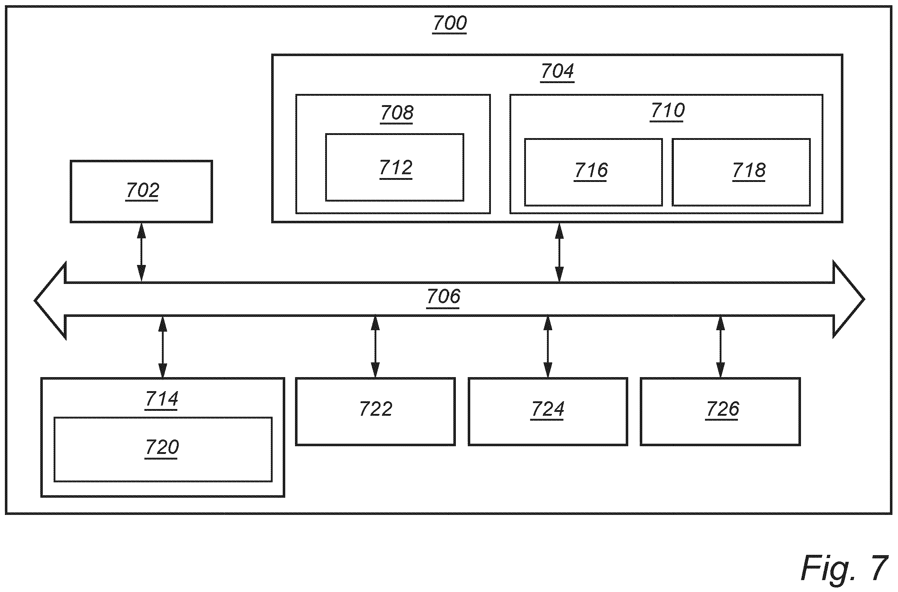

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for a vehicle, the system comprising processing circuitry configured to: determine a steering torque applied from a steering wheel of the vehicle; control a steering assist system to apply a steering torque overlay to steerable wheels of the vehicle in the same direction as the steering torque applied from the steering wheel; compare the steering torque overlay with the determined steering torque applied from the steering wheel, predict a wheel blocking event based on the comparison, apply a counter steering torque overlay using the steering assist system, that is opposite the steering torque from the steering wheel.

Example 2: The computer system of example 1, wherein the counter steering torque overlay is lower than the steering torque applied from the steering wheel.

Example 3: The computer system of any of examples 1 or 2, wherein the processing circuitry is configured to adjust the counter steering torque overlay dynamically based on the steering torque from the steering wheel.

Example 4: The computer system of any of examples 1-3, wherein a wheel blocking event is predicted when the comparison indicates that the steering torque overlay exceeds the steering torque by an amount that indicates wheel blocking.

Example 5: The computer system any of examples 1-4, wherein comparing the steering torque overlay with the steering torque applied from the steering wheel, and predicting a wheel blocking event based on the comparison is performed in a deep neural network or a machine learning algorithm.

Example 6: The computer system of example 5, wherein the processing circuitry is further configured to input data indicating the steering torque and the steering torque overlay in addition to at least one more data set into the deep neural network or a machine learning algorithm.

Example 7: The computer system of example 6, wherein the at least one more data set is selected from the group comprising: vehicle speed, steering angle, steering velocity, applied steering torque, vehicle mass, applied steering torque overlay, image data from a camera, and environmental data from a radar.

Example 8: The computer system any of examples 1-7, wherein the processing circuitry is further configured to: provide an output message to a human-machine interface indicating that a wheel blocking event is detected.

Example 9: The computer system any of examples 1-8, wherein the wheel blocking is due to steerable wheels of the vehicle hitting an external object.

Example 10: The computer system any of examples 1-9, wherein the processing circuitry is further configured to: adjust the counter steering torque overlay dynamically based on the severity of the predicted wheel blocking event.

Example 11: A vehicle comprising the computer system of any of examples 1-8.

Example 12: A computer-implemented method, comprising:
determining, by processing circuitry of a computer system, a steering torque applied from a steering wheel of the vehicle; controlling, by the processing circuitry, a steering assist system to apply a steering torque overlay to steerable wheels of the vehicle in the same direction as the steering torque applied from the steering wheel; comparing, by the processing circuitry, the steering torque overlay with the determined steering torque applied from the steering wheel, predicting, by the processing circuitry, a wheel blocking event based on the comparison, applying, by the processing circuitry, a counter steering torque overlay using the steering assist system, that is opposite the steering torque from the steering wheel.

Example 13: The method of example 12, wherein the counter steering torque overlay is lower than the steering torque applied from the steering wheel.

Example 14: The method of any of examples 12-13, further comprising, adjusting, by the processing circuitry, the counter steering torque overlay dynamically based on the steering torque from the steering wheel.

Example 15: The method of any of examples 12-14, wherein a wheel blocking event is predicted when the comparison indicates that the steering torque overlay exceeds the steering torque by an amount that indicates wheel blocking.

Example 16: The method of any of examples 10-13, wherein comparing the steering torque overlay with the steering torque applied from the steering wheel, and predicting a wheel blocking event based on the comparison is performed in a deep neural network or a machine learning algorithm.

Example 17: The method of example 16, further comprising: inputting, by the processing circuitry, data indicating the steering torque and the steering torque overlay in addition to at least one more data set into the deep neural network or a machine learning algorithm.

Example 18: The method of example 17, wherein the at least one more data set is selected from the group comprising: vehicle speed, steering angle, steering velocity, applied steering torque, vehicle mass, applied steering torque overlay, image data from a camera, and environmental data from a radar.

Example 19: The method of any of examples 12-18, further comprising: providing, by the processing circuitry, an output message to a human-machine interface indicating that a wheel blocking event is detected.

Example 20: The method of any of examples 12-19, wherein the wheel blocking is due to steerable wheels of the vehicle hitting an external object.

Example 21: The method of any of examples 12-20, further comprising: adjusting, by the processing circuitry, the counter torque dynamically based on the severity of the predicted wheel blocking event.

Example 22: A computer program product comprising program code for performing, when executed by the processing circuitry, the method of any of examples 12-21.

Example 23: A non-transitory computer-readable storage medium comprising instructions, which when executed by the processing circuitry, cause the processing circuitry to perform the method of any of examples 12-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for a vehicle (104), the system comprising processing circuitry (102) configured to:
determine a steering torque applied from a steering wheel (108) of the vehicle;
control a steering assist system (114) to apply a steering torque overlay to at least one steerable wheel of the vehicle in the same direction as the determined steering torque applied from the steering wheel (108);
compare the applied steering torque overlay with the determined steering torque applied from the steering wheel (108),
predict a wheel blocking event based on the comparison, and
apply a counter steering torque overlay using the steering assist system (114), that is opposite the steering torque from the steering wheel.

2. The computer system of claim 1, wherein the counter steering torque overlay is lower than the steering torque applied from the steering wheel.

3. The computer system of any of claims 1 or 2, wherein the processing circuitry is configured to adjust the counter steering torque overlay dynamically based on the steering torque from the steering wheel.

4. The computer system of any of claims 1-3, wherein a wheel blocking event is predicted when the comparison indicates that the steering torque overlay exceeds the steering torque by an amount that indicates wheel blocking.

5. The computer system any of claims 1-4, wherein comparing the steering torque overlay with the steering torque applied from the steering wheel, and predicting a wheel blocking event based on the comparison is performed in a deep neural network or a machine learning algorithm.

6. The computer system of claim 5, wherein the processing circuitry is further configured to input data indicating the steering torque and the steering torque overlay in addition to at least one more data set into the deep neural network or a machine learning algorithm.

7. The computer system of claim 6, wherein the at least one more data set is selected from the group comprising: vehicle speed, steering angle, steering velocity, applied steering torque, vehicle mass, applied steering torque overlay, image data from a camera, and environmental data from a radar.

8. The computer system any of claims 1-7, wherein the processing circuitry is further configured to:
provide an output message to a human-machine interface indicating that a wheel blocking event is detected.

9. The computer system any of claims 1-8, wherein the wheel blocking is due to steerable wheels of the vehicle hitting an external object.

10. The computer system any of claims 1-9, wherein the processing circuitry is further configured to:
adjust the counter steering torque overlay dynamically based on the severity of the predicted wheel blocking event.

11. A vehicle comprising the computer system of any of claims 1-10.

12. A computer-implemented method, comprising:
determining (S102), by processing circuitry of a computer system, a steering torque applied from a steering wheel of the vehicle;
controlling (S104), by the processing circuitry, a steering assist system to apply a steering torque overlay to steerable wheels of the vehicle in the same direction as the steering torque applied from the steering wheel;
comparing (S106), by the processing circuitry, the steering torque overlay with the determined steering torque applied from the steering wheel,
predicting (S108), by the processing circuitry, a wheel blocking event based on the comparison,
applying (S110), by the processing circuitry, a counter steering torque overlay using the steering assist system, that is opposite the steering torque from the steering wheel.

13. The method of claim 12, wherein the counter steering torque overlay is lower than the steering torque applied from the steering wheel.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
